# EUROPEAN PATENT SPECIFICATION

(11) **EP 1 053 056 B1**
(45) Date of publication and mention of the grant of the patent: **13.10.2004**
(21) Application number: 99965972.5
(22) Date of filing: 01.12.1999
(51) Int. Cl.: B01L 3/00, G01N 30/46

(54) **MODULAR SOLID PHASE EXTRACTION PLATE ASSEMBLY**
MODULARE MEHRFACHLOCHTESTPLATTEANORDNUNG ZUR FESTPHASENEXTRAKTION
ENSEMBLE PLAQUE MODULAIRE D'EXTRACTION LIQUIDE-SOLIDE

(30) Priority: 08.12.1998 US 208610
(43) Date of publication of application: 22.11.2000
(73) Proprietor: Varian, Inc., Palo Alto, CA 94304 (US)
(72) Inventor: NAU, David, R., Manhattan Beach, CA 90266 (US); BUFFA, Albert, J., Winnetka, CA 91305 (US); SIMPSON, Nigel, Torrance, CA 90505 (US)
(74) Representative: Foster, Mark Charles
(86) International application number: PCT/US1999/028590
(87) International publication number: WO 2000/033960

(56) References cited:
- US-A- 5 603 899
- US-A- 5 716 584
- US-A- 5 800 784
- US-A- 5 846 493

## Description

### FIELD OF INVENTION

This invention relates to systems and methods for extracting solutes from solutions, and in particular to components and methods for solid phase extraction (SPE).

### BACKGROUND OF THE INVENTION

In conventional solid phase extraction methods, solutes of interest are isolated from solution by running the solution through a solid phase extraction medium (sorbent) such as coated silica particles. A 96-well solid phase extraction plate is typically placed on a vacuum manifold. The vacuum manifold provides a pressure gradient over sorbents in the plate wells, driving the flow of liquid through the wells. The solutes of interest bind to the extraction medium, while the rest of the solution passes on to collection containers. The solutes of interest can then be recovered by running a suitable solvent through the extraction medium.

Typical extraction plates are monolithic 96-well plates having identical sorbents in all their wells. For descriptions of such plates see for example U.S. Patent Nos. 5,417,923, 5,047,215, 5,679,310, and European Patent Publication No. 0576602B1. The end user of a conventional monolithic plate cannot customize the sorbents in different wells of the plate in a practical manner. Thus, an end user investigating different assay methodologies and sorbents for a particular application may need a new 96-well extraction plate for each tested condition, even if only a few wells are required.

### SUMMARY OF THE INVENTION

The present invention provides a solid phase extraction plate assembly and an extraction apparatus as defined in the appended claims. In an embodiment the apparatus comprises a vacuum manifold connected to a vacuum source, defining a collection enclosure; a plurality of collection containers disposed in the collection enclosure; and an extraction plate assembly mounted on the manifold and covering the collection enclosure. The extraction plate assembly comprises a base plate mounted on the manifold, and a plurality of extraction cartridges mounted on the base plate.

The base plate has a top surface and a bottom surface. A plurality of apertures extend through the base plate from the top surface to the bottom surface. Each extraction cartridge has an inlet and an outlet. Each cartridge is removably locked in a corresponding aperture of the base plate with its inlet situated opposite its outlet relative to the base plate. Locking the extraction cartridges to the base plate allows the end user to reuse the base plate, replace used extraction cartridges, and customize the extraction media of the extraction plate assembly. Reusing the base plate allows the end user to reduce the amount of material discarded with each use.

Each cartridge comprises a solid-phase extraction medium disposed between its inlet and its outlet, for extracting solutes of interest from a liquid sample inserted into the cartridge through its inlet: Different cartridges of the extraction plate assembly may have different extraction media. Each base plate aperture and cartridge outlet faces a corresponding collection container when the extraction plate assembly is mounted on the manifold, such that the collection container receives liquid from the cartridge outlet.

Each cartridge is preferably locked to the base plate through a snap-in lock. A snap-in lock allows relatively easy insertion and removal of cartridges from the base plate, and allows multiple linked cartridges to be removed from or inserted into the base plate simultaneously, in one motion. Preferably, the base plate has a counteraperture defined in the side wall of each aperture, and each extraction cartridge has a snap-in ridge for engaging a corresponding counteraperture to snap the cartridge into the base plate. Alternatively, each aperture may have a ridge defined in its side wall, and each cartridge may have a corresponding complementary depression for engaging the ridge.

The counteraperture is preferably situated at the bottom end of its corresponding aperture, along the bottom surface of the base plate, such that the snap-in ridge is positioned along the bottom surface when the cartridge is locked to the base plate. The counteraperture may also be situated within its corresponding aperture, such that the snap-in ridge is enclosed within the aperture when the extraction cartridge is locked to the base plate. Positioning the counteraperture at a base plate edge allows relatively close spacings between adjacent apertures, by relaxing the constraints imposed on the minimum inter-counteraperture spacing by base plate mechanical stability requirements. Closely spacing adjacent apertures allows increased cartridge fluid-holding volumes as a fraction of the total volume defined by the overall dimensions of the extraction plate assembly.

In an alternative embodiment, each cartridge is locked to the base plate through a screw-in lock. The base plate then has a helical groove defined in each aperture, and each cartridge has a helical thread complementary to the groove, for engaging the groove to screw the cartridge into the base plate.

The extraction plate assembly does not allow any substantial air paths therethrough other than through the extraction media. If the seal provided by the locking interface is not sufficient, a gasket may be used to establish a vacuum seal along an interface between each cartridge and the base plate. The gasket is preferably positioned between the top surface of the base plate and a lip of the cartridge. The gasket prevents gas flow through its corresponding base plate aperture, outside the cartridge.

The present invention further provides a method of making an extraction plate assembly and an extraction apparatus of the present invention. The base plate and extraction cartridges are individually manufactured by injection molding, extrusion, or other known techniques. The extraction cartridges are then locked into the base plate. The resulting extraction plate assembly if mounted onto the manifold, and positioned underneath a fluid-handling apparatus.

### BRIEF DESCRIPTION OF THE DRAWINGS

Fig. **1-A** shows a perspective view of a preferred extraction apparatus of the present invention.
Fig. **1-B** shows a side sectional view of the apparatus of Fig. **1-A**.
Fig. **1-C** shows a top view of the apparatus of Fig. **1-A**.
Fig. **2-A** shows a side sectional view of two extraction containers locked in a base plate, according to the preferred embodiment of the present invention.
Fig. **2-B** shows a top view of one of the extraction containers of Fig. **2-A**.
Figs. **3-A** through **3-E** illustrate side sectional views of extraction containers locked in base plates, according to respective alternative embodiments of the present invention.

### DETAILED DESCRIPTION OF THE INVENTION

In the following description, the term "vacuum" is understood to encompass partial vacuum pressures. The terms "top" and "bottom" are understood to be relative terms characterizing spatial relationships relative to a major plane of a base plate; the terms need not refer to the direction of gravity.

The following description illustrates embodiments of the invention by way of example and not necessarily by way of limitation.

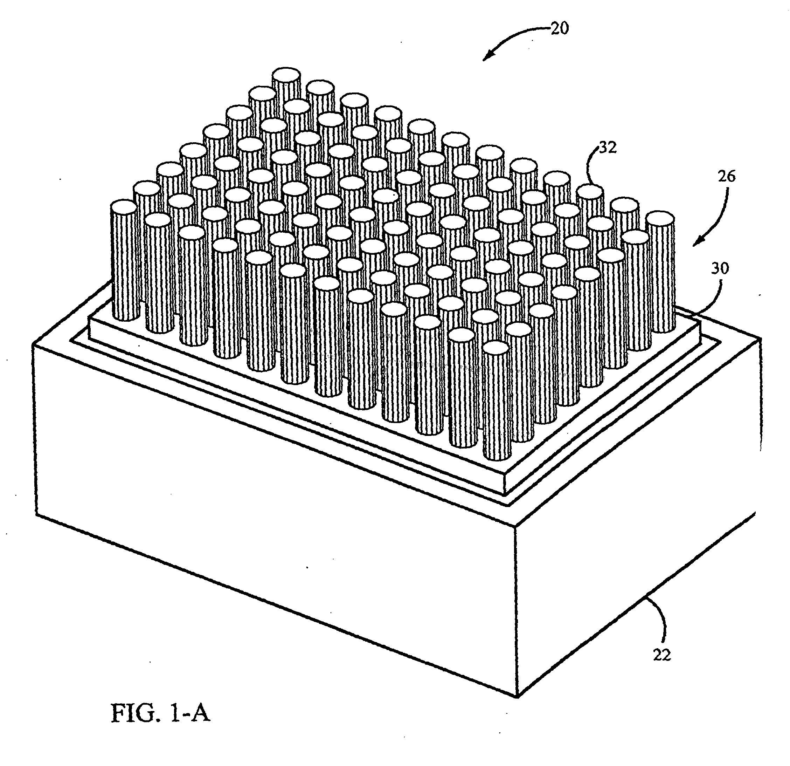

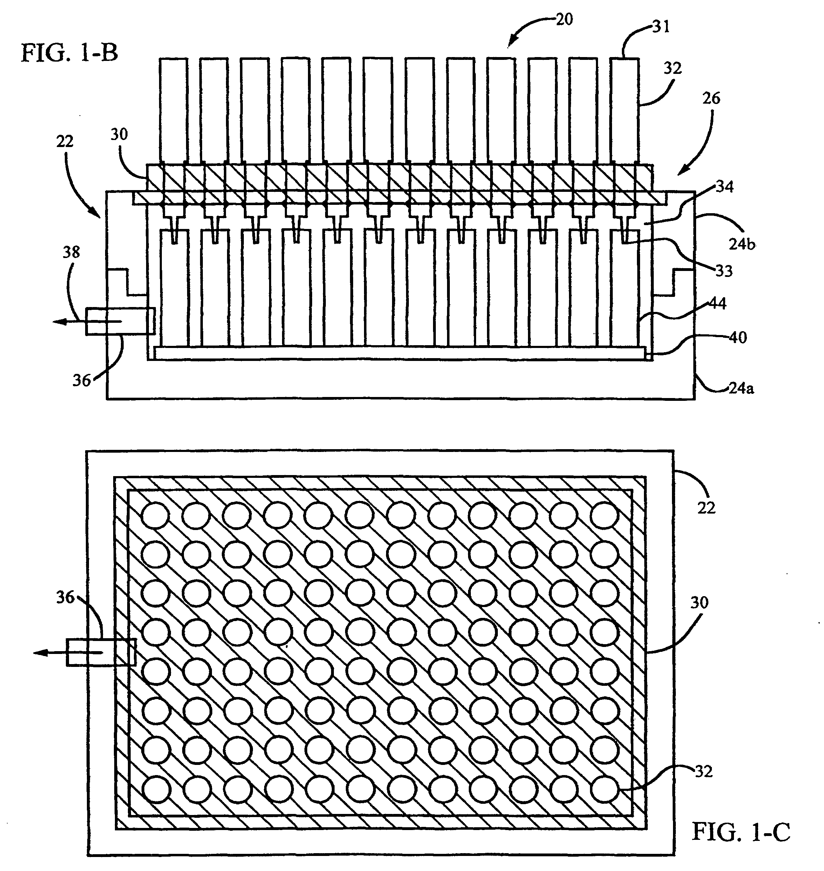

Fig. **1-A** shows a perspective view of a preferred extraction apparatus **20** of the present invention. Figs. **1-B** and **1-C** show side sectional and top views of apparatus **20**, respectively. Apparatus **20** comprises a vacuum manifold **22**, and an extraction plate assembly **26** mounted on manifold **22**. Extraction plate assembly **26** comprises a base plate **30** mounted on manifold **22**, and a plurality of extraction cartridges (containers, tubes) **32** mounted on base plate **30**. Cartridges **32** are locked into base plate **30**, allowing an end user to replace selected cartridges **32** and reuse base plate **30**. Base plate **30** is hatched in Figs. **1-B** and **1-C** for clarity of presentation. Extraction plate assembly **26** preferably comprises 96 extraction cartridges **32**, each passing through an aperture in base plate **30**.

As illustrated in Fig. **1-B**, each extraction cartridge **32** has an inlet **31** and an outlet **33**. Each cartridge **32** further comprises a conventional extraction solid phase extraction medium (not shown) positioned in the fluid path between inlet **31** and outlet **33**. When cartridge **32** is mounted on base plate **30**, inlet **31** and outlet **33** are situated on opposite sides of base plate **30**. Inlet **31** is formed by an opening at the top of cartridge **32**, above base plate **30**. Outlet **33** is formed by a spout at the bottom of cartridge **32**, underneath base plate **30**. A conventional robotic sample-handling apparatus (not shown) is positioned to insert a sample through inlet **31**. The sample-handling apparatus may constrain the height of extraction apparatus **20** and cartridges **32**.

Manifold **22** may be a conventional vacuum manifold for holding 96-well collection plates. Manifold **22** comprises a manifold base **24a**, and a support part **24b** mounted on manifold base **24a**. An air conduit **36** is formed in one of the side walls of manifold base **24a**, for connecting the interior of manifold 22 to a conventional vacuum source such as a vacuum pump (not shown). The direction of air flow through air conduit **36** is illustrated by the arrow **38**.

Support part **24b** has a rectangular top aperture for receiving base plate **30**. Base plate **30** is mounted on support part **24b**. Manifold **22** and extraction plate assembly **26** define a sealed enclosure **34** which is externally connected only through air conduit **36** and extraction containers **32**, as explained in more detail below. Gaskets (not shown) may be provided at the interfaces between manifold base **24a** and support part **24b**, and between support part **24b** and base plate **30**, for sealing enclosure **34**.

A collection plate **40** is positioned in manifold **22**, within enclosure **34**. Collection plate **40** can be a standard 96-well collection plate. Collection plate **40** comprises a plurality of collection containers **44** each positioned facing a corresponding aperture of base plate **30** and a corresponding outlet **33**. Each collection container **44** is positioned to receive liquid that has passed through a corresponding extraction cartridge **32**.

The vacuum pump connected to air conduit **36** establishes a partial vacuum within enclosure **34**. Liquid samples each comprising multiple solutes are inserted into inlets **31** by a conventional automatic pipetter (not shown). The pressure gradient across extraction cartridges **32** draws the samples through cartridges **32**. The extraction media within cartridges **32** capture solutes of interest from the samples, while the remaining solutes and solvent are transferred to collection containers **44** through outlets **33**. The solutes of interest can then be eluted from cartridges **32**.

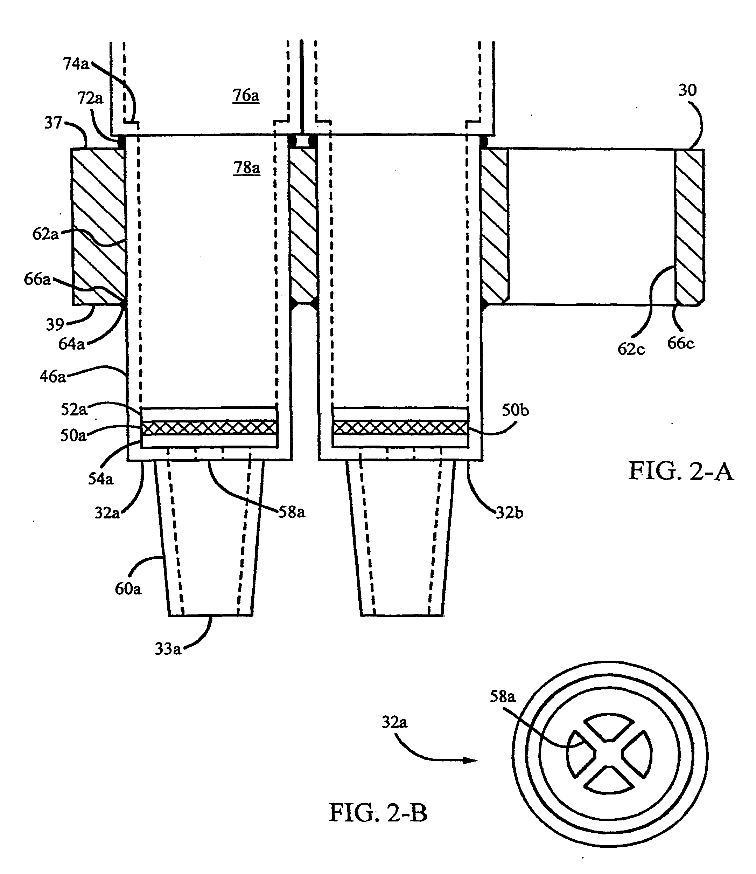

Fig. **2-A** shows a more detailed side sectional view of part of extraction plate assembly **26**, illustrating part of two extraction cartridges **32a-b** and base plate **30**. Fig. **2-B** shows a top view of extraction cartridge **32a**. Cartridge **32b** is similar to cartridge **32a**. As illustrated in Fig. **2-A**, cartridge **32a** comprises a generally cylindrical fluid-holding body **46a**, and a tapered outlet spout **60a** extending downward from fluid-holding body **46a**. A disk-shaped or cylindrical solid-phase extraction medium **50a** is positioned in the fluid passage of cartridge **32a**, at the bottom of fluid-holding body **46a**. Extraction medium **50a** is a conventional solid phase extraction (SPE) silica- or polymer-based sorbent. Suitable surface functional groups for the sorbent include cyano, C1, C2, C4, C8, C18, cyclohexyl, phenyl, among others. Extraction medium **50a** is sandwiched between two conventional frit disks **52a**, **54a**. Extraction medium **50a** may be different from the extraction medium **50b** of cartridge **32b**.

The frit-sorbent composite formed by frit disks **52a**, **54a** and extraction medium **50a** is pressed against the inside side wall of cartridge **32**. Extraction medium **50a** and frit disks **52a**, **54a** are supported by a support structure **58a** extending into the fluid passage of cartridge **32a**, as illustrated in Fig. **2-B**. The transverse cross-section of support structure **58a** is preferably cross-shaped. Support structure **58a** prevents the frit-sorbent composite from sagging into outlet spout **60a** as liquid passes through cartridge **32a**.

As illustrated in Fig. **2-A**, cartridge **32a** is slidably mounted on base plate **30** through an aperture **62a**. Aperture **62a** extends through base plate **30** from a top surface **37** to a bottom surface **39** of base plate **30**. Top surface **37** and bottom surface **39** are preferably substantially planar, parallel surfaces, but may generally include recessed or protruding sections. Aperture **62a** is preferably a cylindrical bore having an inside diameter substantially equal to the outside diameter of the part of cartridge **32a** within aperture **62a**. Aperture **62a** may generally have a non-circular cross-section, such as a square, rectangular, or oval cross-section.

Aperture **62a** has an annular counteraperture (depression, recess) **66a** defined at the bottom end of its side wall, along bottom surface **39** of base plate **30**. Counteraperture **66a** lies in a plane perpendicular to the longitudinal axis of aperture **62a**. Cartridge **32a** has a snap-in ridge **64a** protruding from its side wall. Ridge **64a** is complementary to counteraperture **66a**. At least part of the surface of ridge **64a** engages counteraperture **66a** to snap-in cartridge **32a** into base plate **30**. Ridge **64a** preferably has a triangular longitudinal cross-section. The top planar surface of ridge **64a** abuts counteraperture **66a**, facilitating the locking and removal of cartridge **32a**. The bottom planar surface of ridge **64a** facilitates the insertion of cartridge **32a** into aperture **62a**. A free counteraperture **66c** is shown for an aperture **62c** in the absence of a corresponding extraction cartridge.

A PTFE (teflon) or rubber gasket **72a** is positioned between top surface **37** and a lip **74a** of cartridge **32a**. Gasket **72a** may be provided as part of base plate **30**, and may be attached to base plate **30** by an adhesive. Gasket **72a** may also be provided as part of cartridge **32a**. Gasket **72a** prevents gas flow through aperture **62a** outside cartridge **32a**, between the side walls of aperture **62a** and cartridge **32a**. Gasket **72a** establishes a vacuum seal along the interface between cartridge **32a** and base plate **30**, ensuring that the pressure gradient across base plate **30** efficiently drives the flow of fluid through cartridge **32a**. Lip **74a** is preferably defined by the interface between an upper section **76a** and a lower section **78a** of fluid holding body **46a**. Upper section **76a** has a larger transverse size than lower section **78a**.

Extraction cartridge **32a** is preferably made of a plastic such as polypropylene. Other suitable materials for cartridge **32a** include polyethylene or PTFE. Cartridge **32a** is preferably made by injection molding. Other suitable methods for forming cartridge **32a** include extrusion or machining.

For a 96-well extraction plate assembly, cartridge **32a** has a fluid-holding volume on the order of a few ml, typically between 1 ml and 5 ml, preferably about 2 ml. The center-to-center spacing between adjacent cartridges **32** on base plate **30** is on the order of mm to cm, preferably about 9 mm. The side wall of cartridge **32a** preferably has a constant thickness on the order of tenths of mm to mm, preferably about 0.5 mm. Upper section **76a** of fluid holding body **46a** has a length on the order of a few cm, preferably about 38 mm, an outside diameter on the order of mm, preferably about 9 mm, and an inside diameter on the order of mm, preferably about 8 mm. Lower section **78a** of fluid holding body **46a** has a length on the order of cm, preferably about 17 mm, an outside diameter on the order of mm, preferably about 8 mm, and an inside diameter on the order of mm, preferably about 7 mm. The diameter of aperture **62a** is equal to the outside diameter of lower section **78a**.

The distance between lip **74a** and the center of ridge **64a** is on the order of mm to cm, preferably about 6.5 mm. Ridge **64a** has a longitudinal dimension of about 1 mm. The sum of the thickness of gasket **72a** and the distance between upper surface **37** and lower surface **39** of base plate 30 is about equal to the distance between lip **74a** and the center of ridge **64a**. Ridge **64a** protrudes about 0.25 mm from the side wall of cartridge **32a**. Counteraperture **66a** preferably has a depth of about 0.35 mm, and forms angles of about 45° with respect to the side wall of aperture **62a** and with bottom surface **39** of base plate **30**. The extent of base plate **30** between cartridges **32a-b** is preferably about 1 mm along aperture **62a**, and at least 0.3 mm at the bottom of counteraperture **66a.**

The snap-in attachment of cartridges **32** to base plate **30** allows easy assembly of a heterogeneous extraction plate assembly **26** from cartridges having different extraction media. An end user may obtain extraction cartridges **32** separately from base plate **30**, and then choose the distribution of extraction media to use for extraction plate assembly **26**. A heterogeneous extraction plate assembly allows easily testing multiple extraction media simultaneously, thus facilitating method development, optimization studies, and comparisons or different extraction media. Furthermore, the end user may reuse base plate **30** with new cartridges **32**, or use base plate **30** with only a subset of its potential cartridges **32** by stoppering the unused apertures. By contrast, an end user constrained to use prior-art monolithic extraction plates would need a large number of different extraction plates for testing different extraction media. The end user may need a means of identifying used wells in the monolithic plate, or may need to discard an entire monolithic plate after each use even if a large number of wells within each monolithic plate are not needed for a particular testing method.

Placing counteraperture **66a** along an external surface of base plate **30** allows reducing the spacing between adjacent cartridges **32**. A counteraperture internal to the base plate may require larger spacings between adjacent cartridges, since the base plate internal side walls between adjacent counterapertures need to provide sufficient mechanical stability to the base plate. That is, mechanical stability concerns may require larger inter-counteraperture spacings for internal counterapertures than for external counterapertures.

Placing counteraperture **66a** along bottom surface **39** and gasket **72a** along top surface **37** allows easy insertion of cartridge **32a** from the top of base plate **30**. The transverse cross-sections of cartridge **32a**, aperture **62a**, and counteraperture **66a** are preferably circular for ease of manufacture of cartridge **32a** and base plate **30**, and for ease of insertion of cartridge **32a** into base plate **30**. A flat contact surface for the interface between ridge **64a** and counteraperture **66a** is preferred for ease of manufacture of cartridge **32a** and base plate **30**. Defining counteraperture **66a** in base plate **30** and ridge **64a** on cartridge **32** may allow the use of fewer mold parts during the manufacture of cartridge **32** than defining a ridge in the base plate and a complementary depression in the cartridge.

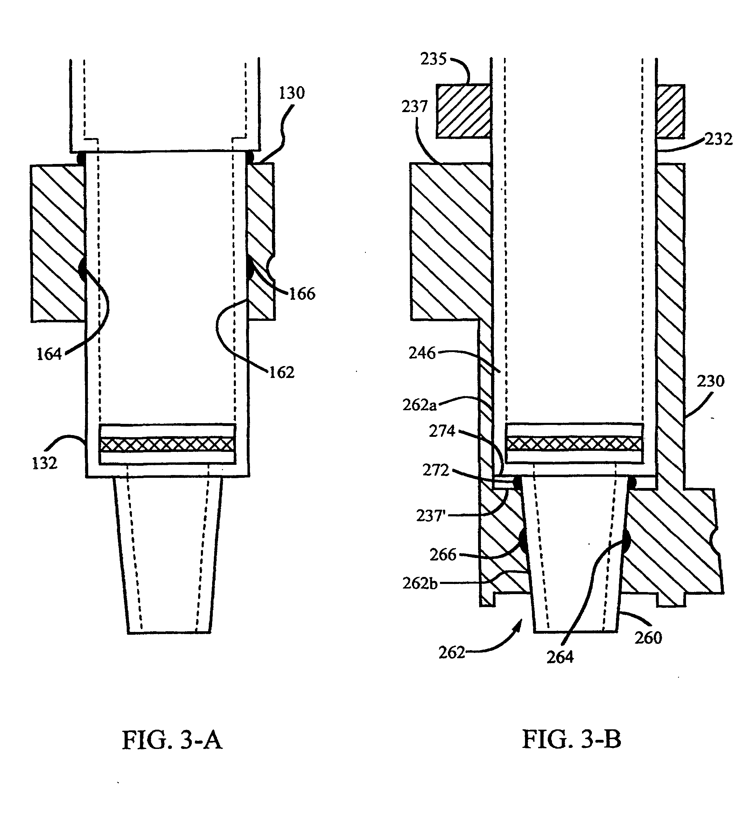

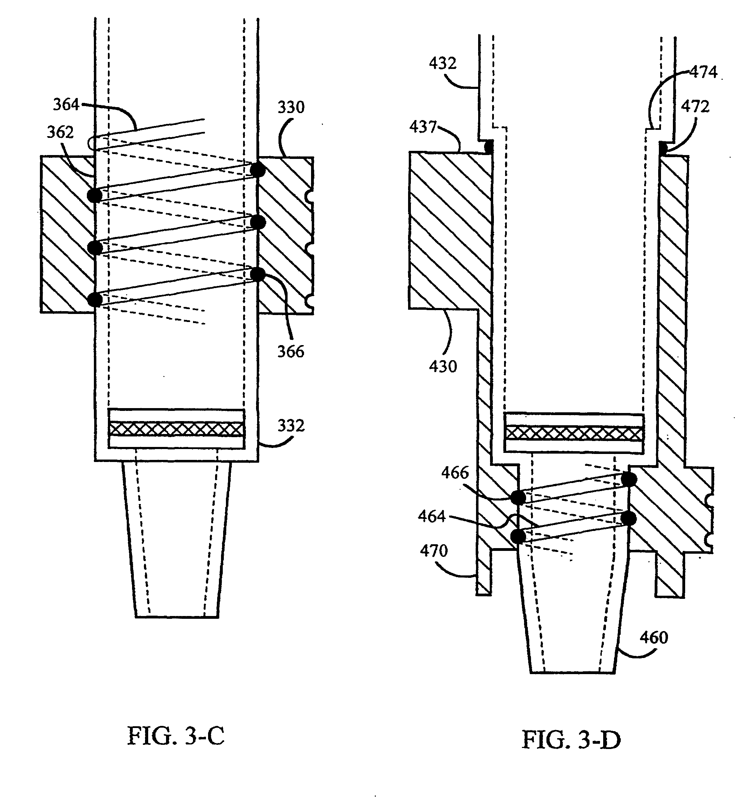

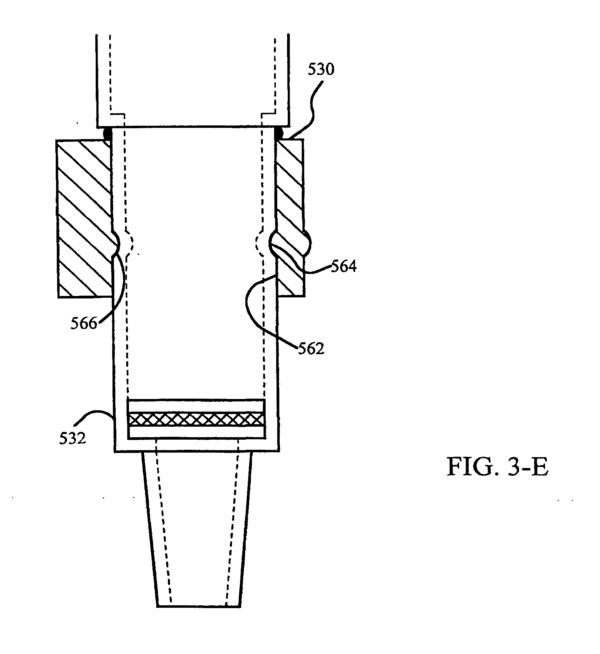

Fig. **3-A** shows a side sectional view of part of an extraction cartridge **132** and a corresponding base plate **130**, according to an alternative embodiment of the present invention. Base plate **130** has an annular counteraperture **166** which is internal to its corresponding aperture **162**. In longitudinal cross-section (in the plane of Fig. **3-A**), counteraperture **166** has a curved shape. Cartridge **132** has an annular ridge **164** complementary to counteraperture **166**. The curved surface of the interface between ridge **164** and counteraperture **166** allows an improved fit between cartridge **132** and base plate **130**.

Fig. **3-B** shows a side sectional view of part of an extraction cartridge **232** and a base plate **230,** according to another alternative embodiment of the present invention. Base plate **230** comprises an aperture **262** extending therethrough. Aperture **262** comprises an upper section **262a** and a lower section **262b**. Upper section **262a** has a larger diameter than lower section **262b.** A counteraperture **266** is defined in lower section **262b**. Base plate **230** has a top surface **237** including a recessed portion **237'**.

Cartridge **232** comprises a fluid-holding body **246** and an outlet spout **260** extending downward from fluid-holding body **246**. Fluid holding body **246** defines a lip **274** at its interface with outlet spout **260**. Cartridge **232** further comprises a ridge **264** protruding from outlet spout **264**. Ridge **264** is complementary to counteraperture **266**, and engages counteraperture **266** to lock cartridge **232** to base plate **230**. A gasket **272** is sandwiched between lip **274** and recessed portion **237'**, sealing aperture **262** and preventing air flow outside cartridge **232**.

Cartridge **232** is part of a monolithic group of cartridges connected by a connection plate **235**. The cartridge group may be for example a strip of 8 or 12 cartridges having identical extraction media. The cartridge group may be collectively locked to and removed from base plate **230**. The cartridge group and connection plate 235 may be formed by an individual molded piece.

Fig. **3-C** shows a side sectional view of part of an extraction cartridge **332** and a corresponding base plate **330**, according to yet another alternative embodiment of the present invention. Base plate **330** has an aperture **362** extending therethrough. A helical groove **366** is defined in aperture **362**. Helical groove **366** extends through aperture **362**. Cartridge **364** has a helical thread **364** protruding from its side wall. Helical thread **364** is complementary to helical groove **366**, and engages helical groove **366** to screw cartridge **332** into plate **330**.

Fig. **3-D** shows a side sectional view of part of an extraction cartridge **432** and a corresponding base plate **430**, according to still another alternative embodiment of the present invention. Cartridge **432** has a helical thread **464** protruding from an outlet spout **460**. Helical thread **464** engages a complementary helical groove 466 defined in a lower section **462b** of an aperture **462**. Outlet spout **460** extends through lower section **462b**. A fluid-holding body **446** of cartridge **432** extends through an upper section **462a** of aperture **462**. A gasket **472** rests on base plate **430** at the upper end of upper section **462**. A lip **474** of cartridge **432** is pressed down onto gasket **472**.

Fig. **3-E** shows a side sectional view of a part of an extraction cartridge **532** and a corresponding base plate **530**, according to yet another alternative embodiment of the present invention. Base plate **530** has an aperture **562** for receiving cartridge **532**. A ridge **564** protrudes from the side wall of aperture **562**. Cartridge **532** has an annular depression (recess, notch) **566** defined in its side wall, for engaging ridge **564** to snap cartridge **532** into base plate **530**.

It will be clear to one skilled in the art that the above embodiments may be altered in many ways without departing from the scope of the invention. For example, the base plate need not be a monolithic molded part, but may include two or more sandwiched flat sections. More than one counteraperture may be used. Accordingly, the scope of the invention should be determined by the following claims.

## Claims

1. A solid phase extraction plate assembly for extracting solutes from liquid samples, comprising:
a) a base plate (30) having a top surface and a bottom surface, and a plurality of apertures (62a) extending through said base plate from said top surface to said bottom surface, each of said apertures having a counteraperture (66a,166) defined therein; and
b) a plurality of cartridges (32) each having an inlet (31) and an outlet (33), each of said cartridges being slidably mounted and removably locked in a corresponding aperture of said base plate with said inlet situated opposite said outlet relative to said base plate, said each of said cartridges having:
a snap-in ridge (64a,164) for engaging a corresponding counteraperture (66a,166) to snap said each of said cartridges into said base plate, and
a solid phase extraction medium (50a) disposed between said inlet and said outlet, for extracting a solute from a liquid sample inserted into said each of said cartridges through said inlet.

2. The plate assembly of claim 1 wherein:
a) said corresponding aperture of the base plate has a ridge (564) protruding therefrom; and
b) said each of said cartridges has a depression for engaging said ridge to snap said each of said cartridges into said base plate.

3. The assembly of claim 1 wherein said counteraperture is situated substantially at a bottom end of said corresponding aperture, along said bottom surface of said base plate, such that said snap-in ridge is positioned along said bottom surface of said base plate when said each of said cartridges is locked to said base plate.

4. The assembly of claim 1 wherein said counteraperture is situated within said corresponding aperture, such that said snap-in ridge is enclosed within said corresponding aperture when said each of said extraction cartridges is locked to said base plate.

5. The assembly of claim 1, 2, 3, 4 further comprising a gasket positioned between said top surface and a lip of said each of said cartridges, for preventing gas flow through said corresponding aperture outside said each of said cartridges.

6. The assembly or apparatus of any one of the preceding claims wherein said plurality of cartridges comprises afirst cartridge having a first solid phase extraction medium, and a second cartridge having a second solid phase extraction medium different from said first solid phase extraction medium.

7. The assembly of claim 1 wherein
a) said corresponding aperture (362) of the base plate has a helical groove (366) defined therein; and
b) said each of said cartridges has a helical thread (364) for engaging said groove to screw said each of said cartridges into said base plate.

8. A method of making an extraction plate assembly for extracting solutes from liquid samples, comprising:
a) providing a base plate having a top surface and a bottom surface, and a plurality of apertures extending through said base plate from said top surface to said bottom surface; and
b) providing a plurality of extraction cartridges each having an inlet and an outlet, each of said cartridges having a solid phase extraction medium disposed between said inlet and said outlet, for extracting a solute from a liquid sample inserted into said each of said cartridges through said inlet; and
c) removably locking each of said cartridges into a corresponding aperture of said base plate with said inlet situated opposite said outlet relative to said base plate, either by snapping-in or by screwing said each of said cartridges into said corresponding aperture.

9. A solid phase extraction apparatus for extracting solutes from liquid samples, comprising:
a) a vacuum manifold connected to a vacuum source, defining a collection enclosure;
b) a plurality of collection containers disposed in said collection enclosure;
c) a solid phase extraction plate assembly of claims 1-7 mounted on said vacuum manifold and covering said collection enclosure, each of said apertures of said plate assembly being disposed substantially opposite one of said collection containers.

## Patentansprüche

1. Festphasen-Extraktionsplatten-Anordnung zum Extrahieren gelöster Stoffe aus flüssigen Proben, umfassend:
a) eine Basisplatte (30) mit einer oberen Oberfläche und einer unteren Oberfläche und einer Anzahl von Öffnungen (62a), die sich durch die Basisplatte von der oberen Oberfläche zur unteren Oberfläche erstrecken, wobei jede der Öffnungen eine darin definierte Gegenöffnung (66a, 166) besitzt; und
b) eine Anzahl von Patronen (32), von denen jede einen Einlass (31) und einen Auslass (33) besitzt, wobei jede der Patronen gleitfähig in einer zugehörigen Öffnung der Basisplatte montiert und darin entfembar eingerastet ist, wobei der Einlass, bezogen auf die Basisplatte, gegenüber dem Auslass angeordnet ist, und wobei jede der Patronen besitzt:
- eine Einschnappkante (64a, 164) zum Eingreifen in eine zugeordnete Gegenöffnung (66a, 166), um jede der Patronen in die Basisplatte einzuschnappen, und
- ein Festphasen-Extraktionsmedium (50a), das zwischen dem Einlass und dem Auslass angeordnet ist, zum Extrahieren eines gelösten Stoffes aus einer in jede der Patronen durch den jeweiligen Einlass eingeführten flüssigen Probe.

2. Plattenanordnung nach Anspruch 1, wobei
(a) die zugeordnete Öffnung der Basisplatte eine aus ihr hervorstehende Kante (564) besitzt, und
(b) jede der Patronen eine Vertiefung zum Ineinandergreifen mit der Kante besitzt, um jede der Patronen in die Basisplatte einzuschnappen.

3. Anordnung nach Anspruch 1,
wobei die Gegenöffnung im Wesentlichen an einem unteren Ende der zugeordneten Öffnung, entlang der unteren Oberfläche der Basisplatte, angeordnet ist, so dass die Einschnappkante entlang der unteren Oberfläche der Basisplatte ausgerichtet ist, wenn jede der Patronen in der Basisplatte eingesetzt ist.

4. Anordnung nach Anspruch 1,
wobei die Gegenöffnung in der zugeordneten Öffnung angeordnet ist, so dass die Einschnappkante in der zugeordneten Öffnung eingeschlossen ist, wenn jede der Extraktions-Patronen in der Basisplatte eingesetzt ist.

5. Anordnung nach Anspruch 1, 2, 3 oder 4,
ferner umfassend eine Dichtung, angeordnet zwischen der oberen Oberfläche und einer Lippe jeder der Patronen, um einen Gasfluss durch die zugeordnete Öffnung außerhalb jeder der Patronen zu verhindern.

6. Anordnung oder Vorrichtung nach einem der vorangehenden Ansprüche,
wobei die Anzahl von Patronen eine erste Patrone umfasst mit einem ersten Festphasen-Extraktionsmedium, und eine zweite Patrone umfasst mit einem zweiten Festphasen-Extraktionsmedium, das verschieden ist vom ersten Festphasen-Extraktionsmedium.

7. Anordnung nach Anspruch 1, wobei:
a) die zugeordnete Öffnung (362) der Basisplatte eine definierte spiralförmige Rille (366) darin besitzt; und
b) jede der Patronen ein spiralförmiges Gewinde (364) zum Eingreifen in die Rille besitzt, um jede der Patronen in die Basisplatte einzuschrauben.

8. Verfahren zum Herstellen einer Extraktionsplatten-Anordnung zum Extrahieren gelöster Stoffe aus flüssigen Proben, umfassend:
a) es wird eine Basisplatte mit einer oberen Oberfläche und einer unteren Oberfläche und einer Anzahl von Öffnungen vorgesehen, die sich durch die Basisplatte von der oberen Oberfläche zur unteren Oberfläche erstrecken; und
b) es wird eine Anzahl von Extraktionspatronen vorgesehen, von denen jede einen Einlass und einen Auslass besitzt, wobei jede der Patronen ein Festphasen-Extraktionsmedium besitzt, das zwischen dem Einlass und dem Auslass angeordnet ist, zum Extrahieren eines gelösten Stoffes aus einer flüssigen Probe, die in jede der Patronen durch den jeweiligen Einlass eingeführt werden; und
c) es wird jede der Patronen in eine zugeordnete Öffnung der Basisplatte entfembar eingesetzt, wobei der Einlass, bezogen auf die Basisplatte, gegenüber dem Auslass angeordnet ist, entweder durch Einschnappen oder durch Einschrauben jeder der Patronen in die zugeordnete Öffnung.

9. Festphasen-Extraktionsvorrichtung zum Extrahieren gelöster Stoffe aus flüssigen Proben, umfassend:
a) einen mit einer Vakuumquelle verbundenen Vakuum-Verteiler, der ein Sammelgehäuse definiert;
b) eine Anzahl von Sammelbehältern, angeordnet im Sammelgehäuse;
c) eine Festphasen-Extraktionsplatten-Anordnung nach einem der Ansprüche 1 bis 7, montiert auf dem Vakuumverteiler und das Sammelgehäuse bedeckend, wobei jede der Öffnungen der Plattenanordnung im Wesentlichen gegenüber einem der Sammelbehälter angeordnet ist.

## Revendications

1. Ensemble de plaque d'extraction de base solide permettant d'extraire des solutés d'échantillons liquides, comprenant :
a) une plaque de base (30) présentant une surface supérieure et une surface inférieure, et une pluralité d'ouvertures (62a) qui s'étendent à travers ladite plaque de base, entre ladite surface supérieure et ladite surface inférieure, chacune desdites ouvertures présentant une ouverture opposée (66a, 166) définie dans celle-ci ; et
b) une pluralité de cartouches (32), chacune présentant une entrée (31) et une sortie (33), chacune des cartouches étant montée pour coulisser dans une ouverture correspondante de ladite plaque de base, ladite entrée étant située en face de ladite sortie par rapport à ladite plaque de base, chacune desdites cartouches présentant :
une arrête à enclenchement rapide (64a, 164) permettant d'engager une ouverture opposée (166a, 166) correspondante afin d'enclencher chacune desdites cartouches dans ladite plaque de base, et
un milieu (50a) d'extraction en phase solide, disposé entre ladite entrée et ladite sortie, pour extraire un soluté d'un échantillon liquide inséré dans chacune desdites cartouches, à travers ladite entrée.

2. Ensemble de plaque selon la revendication 1, dans lequel :
a) ladite ouverture correspondante de la plaque de base présente une arrête (564) qui fait saillie à partir de celle-ci ; et
b) chacune desdites cartouches présente un creux permettant d'engager ladite arrête pour enclencher chacune desdites cartouches dans ladite plaque de base.

3. Ensemble selon la revendication 1 dans lequel ladite ouverture opposée est située sensiblement au niveau d'une extrémité inférieure de ladite ouverture correspondante, le long de ladite surface inférieure de ladite plaque de base, de telle façon que ladite arrête à enclenchement rapide est positionnée le long de ladite surface inférieure de ladite plaque de base lorsque chacune desdites cartouches est verrouillée sur ladite plaque de base.

4. Ensemble, selon la revendication 1 dans lequel ladite ouverture opposée est située à l'intérieure de ladite ouverture correspondante, de telle façon que ladite arrête à enclenchement rapide est englobée à l'intérieur de ladite ouverture correspondante lorsque chacune desdites cartouches d'extraction est verrouillée sur ladite plaque de base.

5. Ensemble selon la revendication 1, 2, 3, 4 comprenant en outre un joint positionné entre ladite surface supérieure et une lèvre de chacune desdites cartouches, afin d'empêcher l'écoulement de gaz à travers ladite ouverture correspondante à l'extérieur de chacune desdites cartouches.

6. Ensemble ou appareil selon l'une quelconque des revendications précédentes dans lequel ladite pluralité de cartouches comprend une première cartouche présentant un premier milieu d'extraction en phase solide, et une seconde cartouche présentant un second milieu d'extraction en phase solide différent dudit premier milieu d'extraction en phase solide.

7. Ensemble selon la revendication 1, dans lequel
a) ladite ouverture correspondante (362) de la plaque de base présente une rainure hélicoïdale (366) définie dans celle-ci ; et
b) chacune desdites cartouches présente un filet hélicoïdal (364) pour engager ladite rainure afin de visser chacune desdites cartouches dans ladite plaque de base.

8. Procédé de fabrication d'un ensemble de plaque d'extraction pour extraire des solutés d'échantillons liquides, comprenant :
a) la fourniture d'une plaque de base présentant une surface supérieure et une surface inférieure, et une pluralité d'ouvertures s'étendant à travers ladite plaque de base entre ladite surface supérieure et ladite surface inférieure ; et
b) la fourniture d'une pluralité de cartouches d'extraction, chacune présentant une entrée et une sortie, chacune desdites cartouches présentant un milieu d'extraction en phase solide disposé entre ladite entrée et ladite sortie, pour extraire un soluté d'échantillon liquide inséré dans chacune desdites cartouches, à travers ladite entrée ; et
c) le verrouillage de façon amovible de chacune desdites cartouches dans une ouverture correspondante de ladite plaque de base, ladite entrée étant située en face de ladite sortie par rapport de ladite plaque de base, soit par enclenchement rapide ou vissage de chacune desdites cartouches dans ladite ouverture correspondante.

9. Appareil d'extraction de base solide permettant d'extraire des solutés d'échantillons liquides comprenant :
a) un collecteur à vide raccordé à une source de vide, définissant une enceinte de récupération ;
b) une pluralité de conteneurs de récupération disposés dans ladite enceinte de récupération ;
c) un ensemble de plaque d'extraction de phase solide selon les revendications 1 à 7, monté sur ledit collecteur à vide et couvrant ladite enceinte de récupération, chacune desdites ouvertures dudit ensemble de plaque étant disposée sensiblement en face de l'un desdits conteneurs de récupération.
